# EUROPEAN PATENT APPLICATION

(11) **EP 3 961 387 A1**
(43) Date of publication of application: **02.03.2022**
(21) Application number: 20193445.2
(22) Date of filing: 28.08.2020
(51) Int. Cl.: G06F 9/4401, G06F 21/57

(54) **BOOT DEVICE AND METHOD FOR BOOTING A COMPUTER SYSTEM**

(71) Applicant: Omron Corporation, Kyoto-shi, Kyoto 600-8530 (JP)
(72) Inventor: SCHEFFER, Fred, 5234 GM 's-Hertogenbosch (NL); VAN DEN BERG, Bas, 5234 GM 's-Hertogenbosch (NL)
(74) Representative: Horn Kleimann Waitzhofer Patentanwälte PartG mbB

(57) **Abstract**

A boot device for a computer system comprising functional components configured to jointly execute a default computerized process and a current computerized process. The boot device comprises:
an initialization device for executing a system initialization code, the execution comprising an initialization of the functional components according to setting data, wherein the setting data includes default setting data and current setting data, wherein the default setting data has a digital signature associated thereto; and
a verification device for determining whether the digital signature associated to the default setting data is valid; wherein
the initialization device is configured to only entirely execute the system initialization code such that it initializes the functional components to jointly execute the current computerized process if the verification device determines that the digital signature associated to the default setting data is valid.

## Description

The present invention relates to a boot device for a computer system. The present invention further relates to a method for booting such a computer system and to such a computer system.

Starting a computer system typically starts a boot process in which components and functionalities of the computer system are started and initialized. Initialization of the components during the boot process can be performed using a basic input/output system (BIOS) or a unified extensible firmware interface (UEFI), which are globally referred to as "system initialization code". It can be desirable to control access to the system initialization code to control its functionality and avoid any unallowed or undesired changes to the system initialization code.

In this regard, US 10,146,941 B2 suggests calculating a one-time password for the system initialization code and verifying whether a separately calculated password entered by a user corresponds to this one-time password before executing the system initialization code. Thereby, unauthorized modifications of the system initialization code can be prevented.

It is one object of the present invention to provide an improved boot device for a computer system.

According to a first aspect, a boot device for a computer system is provided. The computer system comprises a plurality of functional components, wherein the functional components are configured to jointly execute a default computerized process to which the computer system can revert to at any time and a current computerized process which replaces the default computerized process when selected. The boot device comprises:
an initialization device for executing a system initialization code, wherein the execution of the system initialization code comprises an initialization of the functional components according to setting data, wherein the setting data includes default setting data and current setting data, the default setting data indicating how the functional components interact to jointly execute the default computerized process and the current setting data indicating how the functional components interact to jointly execute the current computerized process, and wherein the default setting data has a digital signature associated thereto; and
a verification device for determining whether the digital signature associated to the default setting data is valid; wherein
the initialization device is configured to only entirely execute the system initialization code such that it initializes the functional components to jointly execute the current computerized process if the verification device determines that the digital signature associated to the default setting data is valid.

Associating a digital signature with the default setting data is advantageous because unallowed modifications of the default setting data can thereby be avoided. In particular, only updates of the default setting data performed by a supplier of the system initialization code (or by another authorized person) may be performed. Thereby, a correct booting using the system initialization code can be ensured and a booting can be performed more reliably and securely. Further, default setting data is advantageously made updateable.

On the other hand, current setting data may not have any digital signature associated thereto. Thereby, modifications of the current setting data, for example by a user of the computer system, can be performed without limitations. This renders the system initialization code more flexible, while maintaining the reliability provided by the digital signature associated with the default setting data.

The computer system can be any type of computer, for example a personal computer (PC) or an industrial PC. The functional components of the computer system can include hardware components such as a processor (CPU), processor cores, a memory device (random access memory (RAM), read only memory (ROM), hard drive, etc.), a graphic card, a screen, a hypervisor or the like. The functional components can be configured to interact to jointly perform multiple computerized processes, in particular a default computerized process and a current computerized process. The term "jointly" here means together, with an interaction between the functional components.

The default computerized process may be an initial computerized process, for example a computerized process which the functional components can perform when they are first initialized. The default computerized process can be a process which is defined by a provider of the computer system and/or of the boot device. The default computerized process may be performed when the functional components are initialized using default setting data. In particular, the default setting data can only be modified by the provider of the computer system and/or of the boot device, but not by a user thereof. The default setting data may be undeletable from the computer system, such that the computer system can revert to the default computerized process at any time. This provides the computer system with a sort of security, because the computer system can always operate according to the default computerized process, even if something goes wrong in another computerized process, for example the current computerized process.

The current computerized process may refer to a computerized process which is currently defined and used by the computer system. The current computerized process may correspond to the default computerized process (in particular, use the same functional components to perform identical or similar tasks) but with different settings for the functional components. These different settings for the functional components can be defined through the current setting data and used to initialize the functional components. The current setting data can be modified and/or deleted by a user of the computer system or of the boot system. When valid current setting data are provided, the computer system may perform the current computerized process instead of the default computerized process. However, when no current setting data are provided at all, when no selected current setting data are provided and/or when no valid current setting data are provided, the computer system may revert to the default computerized process. The setting data can be entirely or partly stored in the system initialization code. Alternatively, part or all of the setting data can be stored elsewhere as a data module and the system initialization code has access to the setting data.

The default setting data and the current setting data can define settings or parameters of the functional components which allow performing the default or current computerized process. For example, the default or current setting data can indicate that a number N (for example three) processor cores (functional components) need to be enabled. This is for example useful in a computer system with multiple parallel running operating systems. The setting data indicating "how the functional components interact" means that the setting data defines settings and parameters of the functional components which allow the functional components to jointly perform the default and/or current computerized process. The default and the current setting data may define a same set of parameters of the functional components but differ in that they set different values to these parameters, for example.

The system initialization code is for example a BIOS or a UEFI (in particular EFI 1.10). It can be defined as firmware used to perform hardware initialization (initialization of the functional components) during the booting process. "Booting" here refers to an initialization or start up of the computer system. The system initialization code may be stored in a rewritable memory, allowing its contents to be replaced and modified. To modify the system initialization code, in particular the current setting data, a special program and a user interface may be provided by the provider of the boot device. The setting data can be considered as a BIOS image. Further, the system initialization code and the setting data can jointly be regarded as a BIOS image.

The system initialization code may include the default setting data and, when available, the current setting data. When valid current setting data are selected (for example by a user of the computer system), the execution of the system initialization code by the initialization device may initialize the functional components such that they can perform the current computerized process instead of the default computerized process. However, when no current setting data are provided in the system initialization code, no selected current setting data are provided in the system initialization code or no valid current setting data are provided in the system initialization code, the execution of the system initialization code by the initialization device may initialize the functional components such that they can perform the default computerized process.

The default setting data having a digital signature associated thereto may mean that the default setting data includes the digital signature or refers to its digital signature. The default setting data have their own digital signature, meaning that the digital signature is specific to the default setting data. The digital signature can be created using a cryptographic protocol and allows authentication (verification whether the default setting data was created by the allowed entity) and integrity verification (verification that the default setting data was not modified) of the associated default setting data. The digital signature may be generated and/or assigned to the default setting data by a provider of the boot device and/or of the computer system.

The validity of the digital signature may be verified by the verification device using a public key or by means of a measure boot, which will be described below.

The initialization device is configured to only entirely execute the system initialization code when the verification device determines that the digital signature associated with the default setting data is valid. "Entirely" in particular means that the entire system initialization code is executed. If the digital signature associated with the default setting data is not valid, the initialization device may still partly execute the system initialization code (for example, in an initialization of the system initialization code) and then block it during the execution process. Alternatively, the system initialization code may be blocked from the beginning when the digital signature associated with the default setting data is not valid, such that the system initialization code is not executed at all. When the digital signature is not valid, the entire execution of the system initialization code is prevented and the computer system is not booted. Thereby, during the booting process, it can be ensured that correct and valid default setting data is available. The booting can hence be performed more reliably and securely.

The initialization device and the verification device can respectively be implemented as software or hardware components.

According to an embodiment, the system initialization code is a basic input/output system (BIOS) and/or a unified extensible firmware interface (UEFI).

In some embodiments, the default setting data defines a layout of the BIOS, defines a configuration of the BIOS, defines or limits an interaction of the user with the BIOS and/or defines or limits options of the BIOS available to the user. Verifying the digital signature associated with the default setting data allows verifying that no unallowable or undesired changes were made to these parameters of the BIOS.

According to a further embodiment, the boot device further comprises a storage device, wherein the verification device is configured to determine whether the digital signature associated to the default setting data is valid by acquiring an indication of a state of the digital signature associated with the default setting data to obtain a signature verification result and by storing the signature verification result in the storage device, the storage device optionally being a trusted platform module (TPM).

In particular, the verification device is configured to perform a measured boot. In the measured boot, the verification device can measure the digital signature of the default setting data (which corresponds to acquiring a state, in particular a validity state, of the digital signature). The integrity of the default setting data can be ascertained by analyzing the signature verification result stored in the storage device, in particular by comparing the signature verification result with predefined data (predetermined requirement) indicative of whether the signature verification result is one of a valid or invalid signature.

The measurement result (signature verification result) can be stored in a platform configuration register (PCR) of the storage device, in particular of the TPM. The TPM is a special storage device which prevents tampering and thereby improves the reliability of the boot device.

According to a further embodiment,
the verification device is further configured to acquire an indication of a state of the default setting data to obtain a default setting measurement result and to store the default setting measurement result in the storage device;
the boot device includes at least one UEFI driver indicating how the initialization device initializes the functional components when executing the system initialization code, wherein the verification device is configured to acquire an indication of a state of the at least one UEFI driver to obtain a driver measurement result and to store the driver measurement result in the storage device; and/or
the boot device is configured to store a boot loader program for starting an operating system of the computer system, the boot loader program having a digital boot loader signature associated thereto, wherein the verification device is configured to acquire an indication of the digital boot loader signature to obtain a boot loader signature measurement result and store the boot loader signature measurement result in the storage device.

The above acquisitions of a state of the default setting data, of the UEFI driver and/or of the digital boot loader signature are further measurements which can be performed by the verification device as part of a measured boot. The "state" can be called "fingerprint" or "hash". It can be a unique code representing the data or element it is associated with.

The UEFI driver may allow the system initialization code to use certain interfaces of the computer system, for example a screen, an Ethernet port, a USB port or the like.

The boot loader program allows loading the operating system(s) of the computer system when the latter is started. The boot loader program has a digital signature associated thereto to verify that the boot loader program comes from the provider of the boot loader program and has not been changed.

The measurement results (default setting measurement result, driver measurement result and/or boot loader signature measurement result) can be stored in PCRs of the storage device, in particular of the TPM. The PCRs can be used as fingerprints in the storage device to unlock certain elements necessary in the booting process.

According to a further embodiment, the verification device is further configured to:
determine whether the signature verification result, the default setting measurement result, the driver measurement result and/or the boot loader signature measurement result stored in the storage device satisfies a predetermined requirement relating to an integrity and/or security of the boot device; wherein
the initialization device is configured to entirely execute the system initialization code only if the verification device determines that the signature verification result, the default setting measurement result, the driver measurement result and/or the boot loader signature measurement result stored in the measurement device satisfies the predetermined requirement.

The integrity of the default setting data, of the default setting, of the UEFI driver and/or of the boot loader can be ascertained by analyzing the signature verification result, the default setting measurement result, the driver measurement result and/or the boot loader signature measurement result stored in the storage device, in particular by comparing the signature verification result, the default setting measurement result, the driver measurement result and/or the boot loader signature measurement result with a predetermined requirement indicating whether the signature verification result, the default setting measurement result, the driver measurement result and/or the boot loader signature measurement result should be allowed and provide an integer and secure boot device.

Since the system initialization code is only entirely executed when the signature verification result, the default setting measurement result, the driver measurement result and/or the boot loader signature measurement result satisfy the predetermined requirement, the integrity and security of the boot device is further improved.

According to a further embodiment,
the current setting data includes first and a second setting data, the first setting data indicating at least one essential functional component selected from the plurality of functional components, the essential functional component being essential for performing the current computerized process, and the first setting data having a digital signature associated thereto;
the verification device is configured to determine whether the digital signature associated to the first setting data is valid; wherein
the initialization device is configured to only entirely execute the system initialization code such that it initializes the functional components to jointly execute the current computerized process if the verification device determines that the digital signature associated to the first setting data is valid.

A part of the current setting data (namely the first setting data) can have a further digital signature associated thereto. The digital signature of the first setting data may have to be verified and determined as being valid before the system initialization code is executed by the initialization device to initialize the functional components to jointly execute the current computerized process. The first setting data is in particular the part of the current setting data which defines the functionality and/or settings of an essential functional component.

Only selected setting data (first setting data), which are essential to the current computerized process are signed and verified. Which setting data is essential (first setting data) and which is not (second setting data) can be defined by a provider of the boot device and/or of the computer system, for example during manufacture thereof. The signing of the first setting data allows functionalities of the computer system relying on the first setting data to be configured correctly.

According to a further embodiment, the first setting data further includes a first configuration information indicating how the at least one essential functional component interacts with the remaining functional components in order to jointly execute the current computerized process, wherein the initialization device is configured to initialize the at least one essential functional component according to the first configuration information.

According to a further embodiment, the second setting data includes a second configuration information indicating how a further functional component other than the at least one essential functional component interacts with the remaining functional components in order to jointly execute the current computerized process; wherein
the initialization device is configured to initialize the further functional component according to the second configuration information directly, in particular without verifying if any further digital signature is valid.

The second setting data may not define any essential functionalities of the current computerized process and may relate to non-essential functional components of the computer system only. The second setting data do not have any digital signature associated thereto, allowing a modification of the second setting data without modifications and without risk of modifying any essential settings (first setting data).

According to a further embodiment,
the computer system includes a virtualization technology for directed I/O as a functional component which is configured to allow other functional components to share resources, the essential functional component indicated by the first setting data being the virtualization technology for directed I/O; and/or
the computer system includes a plurality of processor cores for parallelly executing computing operations on the computer system as a functional component, the essential functional component indicated by the first setting data being one, several or all processor cores from the plurality of processor cores of the computer system.

Setting the virtualization technology for directed I/O as the essential functional component is advantageous when using a hypervisor in an industrial PC, for example, because the hypervisor does not work without activation of the virtualization technology for directed I/O.

Further, a system with multiple parallel running operating systems might need all processor cores enabled to run smoothly. Thus, defining certain or all processor cores as being essential functional components can be advantageous when running multiple parallel operating systems.

According to a further embodiment, the initialization device is configured to load the default setting data before loading the current setting data and/or to load the default setting data in a first part of the initialization device and the current setting data in a second part of the initialization device.

In particular, the default and current setting data are considered separately by the initialization device.

According to a further embodiment, the setting data comprised in the system initialization code includes a plurality of default setting data and/or a plurality of current setting data.

The plurality of default and/or current setting data have the afore-mentioned characteristics of the default and/or current setting data.

According to a further embodiment, the default setting is set by a manufacturer (provider) of the boot device and/or the current setting is set by a user of the boot device.

According to a second aspect, a method for booting a computer system using a boot device, in particular using the boot device according to the first aspect or according to any embodiment of the first aspect is provided. The computer system comprises a plurality of functional components, wherein the functional components are configured to jointly execute a default computerized process to which the computer system can revert to at any time and a current computerized process which replaces the default computerized process when selected. The method comprises:
loading a system initialization code to be executed, wherein an execution of the system initialization code comprises an initialization of the functional components according to setting data, wherein the setting data includes default setting data and current setting data, the default setting data indicating how the functional components interact to jointly execute the default computerized process and the current setting data indicating how the functional components interact to jointly execute the current computerized process, and wherein the default setting data has a digital signature associated thereto;
determining whether the digital signature associated to the default setting data is valid; and
entirely executing the system initialization code such that it initializes the functional components to jointly execute the current computerized process only if it determined that the digital signature associated to the default setting data is valid.

The embodiments and features described with reference to the boot device of the first aspect or of an embodiment thereof apply mutatis mutandis to the method of the second aspect.

According to an embodiment, the method further comprises:
blocking a modification of the default setting by associating a digital signature to the default setting data.

In particular, the modification of the default setting is avoided by associating a digital signature thereto because any modification of the default setting would render the digital signature invalid and hence be noticed. The computer system will not be booted if the default setting data was unallowably modified.

According to a third aspect, a computer system comprising the boot device according to the first aspect or according to an embodiment of the first aspect is provided, wherein the computer system in particular is an industrial PC.

In particular, the functional components of the computer system are initialized using the system initialization code based on the settings defined by the default and/or current setting data.

The embodiments and features described with reference to the boot device of the first aspect or of an embodiment thereof apply mutatis mutandis to the computer system of the third aspect.

According to a further aspect, a computer program product comprising a program code for executing the method according to the second aspect when run on a computer system is provided.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows an embodiment of a computer system with a boot device;
- Fig. 2: shows a method for booting the computer system of Fig. 1;
- Fig. 3: shows an example of a verification of the digital signature associated with default setting data; and
- Fig. 4: shows a further example of a verification of the digital signature associated with the default setting data.

In the Figures, like reference numerals designate like or functionally equivalent elements, unless otherwise indicated.

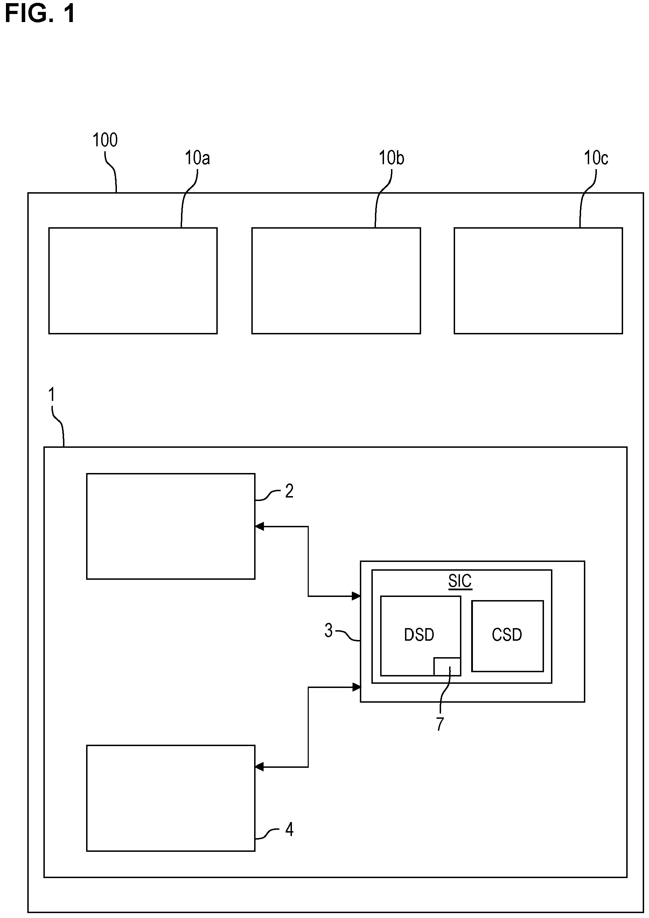

Fig. 1 shows an embodiment of a computer system 100 with a boot device 1. The computer system 100 is an industrial PC. Besides the boot device 1, the computer system 100 includes multiple functional components 10a - 10c, of which only three are shown in Fig. 1. Functional components 10a and 10b are two processor cores, while component 10c is a RAM memory. Further functional components include a hypervisor, an Ethernet port, a screen and the like, which are not shown in Fig. 1.

The boot device 1 is responsible for the booting of the computer system 100. In detail, when the computer system 100 is started, the boot device 1 initializes the components 10a - 10c. In order to initialize the components 10a - 10c, the boot device 1 includes a system initialization code SIC realized as a BIOS (or as a UEFI in alternative embodiments). The system initialization code SIC is stored on a rewritable storage 3 of the boot device 1 and includes default setting data DSD having an associated digital signature 7 and optionally current setting data CSD without associated digital signature. Besides the rewritable storage 3, the boot device 1 further includes an initialization device 2 and a verification device 4.

The boot device 1 is configured to initialize the components 10a - 10c such that these can jointly execute either a default computerized process or a current computerized process. In particular, using the default setting data DSD, the boot device 1 can initialize the components 10a - 10c to execute a default computerized process and using the current setting data CSD, the boot device 1 can initialize the components 10a - 10c to execute a current computerized process.

For example, the default and the current computerized processes both perform complex calculations in which data is read from the RAM 10c, one or both processor cores 10a, 10b perform calculations and the calculation results are written in the RAM 10c. The default setting data DSD indicates that to perform such calculations according to the default computerized process, processor core 10a and the RAM 10c needs to be activated during initialization (booting). On the other hand, the current setting data CSD indicates that to perform such calculations according to the current computerized process, processor core 10a, the RAM 10c and a screen (not shown) need to be activated during initialization. These current setting data CSD are input by a user of the computer system through an interface.

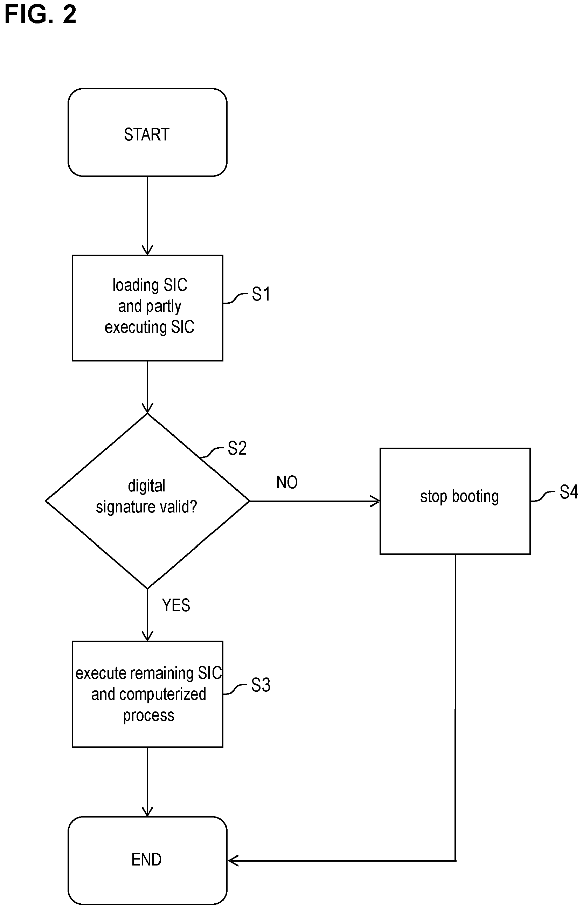

The initialization of the components 10a - 10c by the booting device 1 can be performed according to the method for booting the computer system 100 which is shown in Fig. 2.

In a step S1, the initialization device 2 loads the system initialization code SIC by accessing the rewritable storage 3. The initialization device 2 executes part of the system initialization code SIC. The part of the system initialization code SIC that is executed in step S1 initializes functionalities of the computer system 100 necessary for interactions between the user and the UEFI, in particular a screen, keyboard, disk, etc. of the computer system 100.

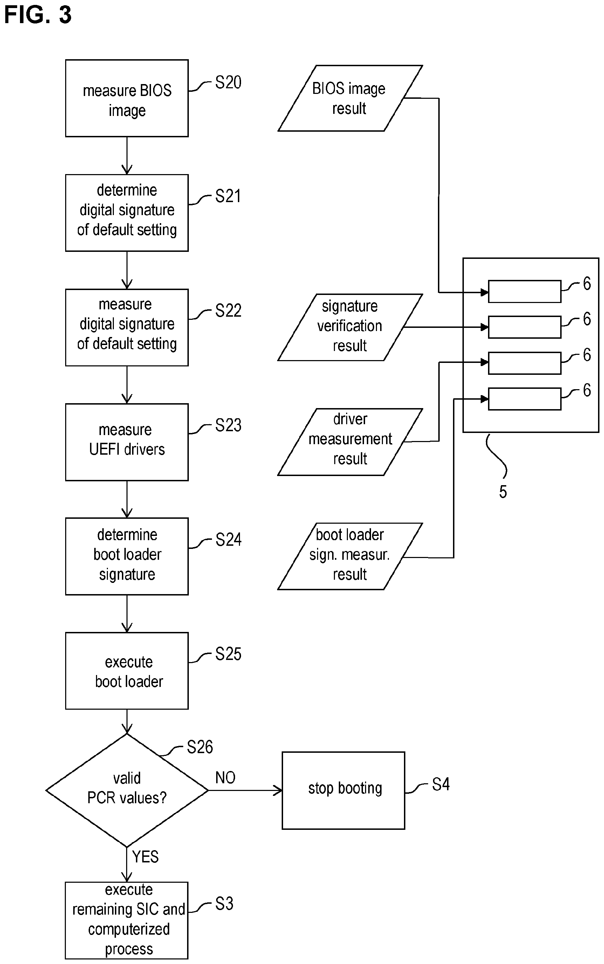

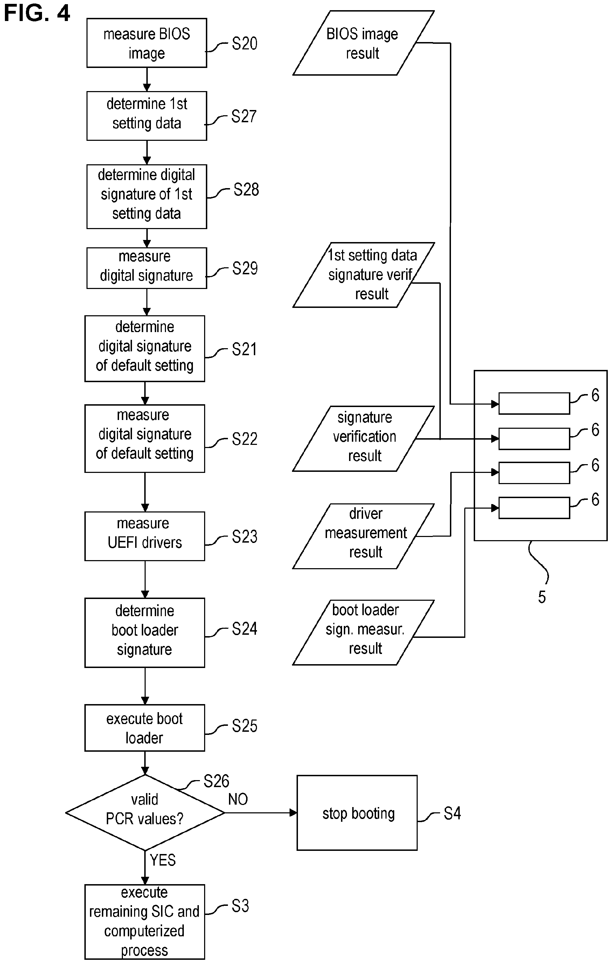

In a step S2, the verification device 4 verifies whether the digital signature 7 associated with the default setting data DSD of the loaded system initialization code SIC is valid or not. To this end, the verification device 4 can use a public key or pursue according to the processes shown in Fig. 3 and 4 described further below.

If the verification device 4 determines in step S2 that the digital signature 7 associated with the default setting data DSD is valid ("YES" in step S2), the initialization device 2 executes the remaining of the system initialization code SIC in step S3. At this step, if the system initialization code SIC comprises current setting data CSD and that the user has selected the current computerized process, the initialization device 2 executes the system initialization code SIC such as to initialize the components 10a - 10c such that they can perform the current computerized process. Otherwise, in step S3, if the system initialization code SIC does not comprise current setting data CSD or if the user has not selected the current computerized process, the initialization device 2 executes the system initialization code SIC such as to initialize the components 10a - 10c such that they can perform the default computerized process. Accordingly, in step S3, the default or current computerized process may be performed.

Otherwise, if the verification device 4 determines in step S2 that the digital signature 7 associated with the default setting data DSD is invalid ("NO" in step S2), the initialization device 2 does not entirely execute the system initialization code SIC and stops the booting process in a step S4. Optionally, an error may be sent out to the user of the computer system 100. Here, if the digital signature 7 associated with the default setting data DSD is not valid, the execution of the system initialization code SIC is blocked from the beginning (the system initialization code SIC is not executed at all).

Associating a digital signature 7 with the default setting data DSD is advantageous because unallowed modifications of the default setting data DSD can thereby be avoided. In particular, only updates of the default setting data DSD performed by a supplier (provider) of the system initialization code SIC are allowed. Thereby, a correct booting using the system initialization code SIC can be ensured and a booting can be performed more reliably and securely. Further, default setting data DSD is advantageously made updateable.

On the other hand, current setting data CSD may not have any digital signature associated thereto. Thereby, modifications of the current setting data CSD, for example by a user of the computer system 100, can be performed without limitations. This renders the system initialization code SIC more flexible, while maintaining the reliability provided by the digital signature 7 associated with the default setting data DSD.

Fig. 3 shows an example of a verification of step S2 of Fig. 2 in a more detailed manner. The left-hand side of Fig. 3 shows process steps which are part of the verification of S2 while the right-hand side of Fig. 3 shows the handling of different results corresponding to the individual steps from the left-hand side.

In detail, in step S20, the verification device 4 measures a BIOS image of the system initialization code SIC. Measuring in the present context means determining a property. The BIOS image is data stored inside a FLASH chip of the computer system 100. It contains executable program code and data necessary for initialization. A result of the measurement of the BIOS image performed in step S20 is a BIOS result (right side of Fig. 3), which is generated by the verification device 4 and stored in a PCR 6 of a storage device 5 of the boot device 1 (not shown in Fig. 1). The storage device 5 is realized as a TPM.

In a step S21, the verification device 4 determines, i.e. loads, the digital signature 7 associated with the default setting data DSD. In step S22, the verification device 4 measures the loaded digital signature 7 associated with the default setting data DSD to obtain a signature verification result (right side of Fig. 3), which gets stored in another PCR 6 of the TPM 5.

In a step S23, the verification device 4 measures UEFI drivers of the boot device 1 (not shown in Fig. 1). The UEFI drivers form an interface between the initialization device 2 and the functional components 10a - 10c. The driver measurement result from measuring the UEFI drivers is stored in a further PCR 6 of the TPM 5 (right side of Fig. 3). It is also possible to extend a measurement previously stored in a PCR 6.

In a step S24, the verification device 4 determines, i.e. loads a digital signature associated with a boot loader (boot loader program) of the boot device 1 (not shown in Fig. 1). The boot loader is a program for starting the operating system of the computer system 100 and has a digital signature associated thereto. The loaded digital signature associated with a boot loader is further measured in step S24 and a corresponding boot loader signature result is stored in a further PCR 6 of the TPM 5 (right side of Fig. 3). In step S25, the boot loader is executed.

In a step S26, the validity of the results (also referred to as "fingerprints") stored in the PCRs 6 of the TPM is checked against predetermined requirements. If at least one of the stored results is determined as not being valid in step S26 ("NO" in step S26), the booting is stopped in step S4. On the other hand, if all stored results are determined to be valid in step S26 ("YES" in step S26), the booting is continued in step S3, in which the remaining of the system initialization code SIC is executed and the computerized process is executed, as explained with regards to Fig. 2.

In the example of Fig. 3, the digital signature 7 verification (included in step S26) can be part of the execution of the boot loader. In other embodiments, the digital signature 7 verification can be part of the execution of the UEFI (the digital signature may be stored in the UEFI image) or can be a separate verification step. In this regard, steps S25 and S26 can be inverted.

The process described in view of Fig. 3 can further be modified in multiple manners. For example, the order of the steps S20 to S25 can be changed. Further, in some embodiments, the verification device 4 may omit some of the steps S20 to S24, in particular such as to omit the measurements of steps S20, S23 or S24, for example.

Fig. 4 shows a further example of a verification of step S2 of Fig. 2 in a more detailed manner. The process of Fig. 4 mostly corresponds to the process described in view of Fig. 3. In the following, only differences between the two processes will be described.

In detail, the process of Fig. 4 comprises additional steps S27 - S29 performed between the steps S20 and S21. These additional steps S27 - S29 are performed in a case where the current setting data CSD include first setting data and second setting data. The distinction between which setting data of the current setting data CSD is first or second setting data can be performed by the provider of the booting device 1 or of the computer system 100.

The first setting data is data used by the initialization device 2 to initialize essential functional components 10a - 10c of the computer system 100, which are essential for performing the current computerized process. For example, the provider can decide that in order to perform calculations in a current computerized process, at least two processor cores 10a, 10b should be enabled to allow the computer system 100 to run smoothly while performing the calculations. In this case, the first setting data can be the setting data of the current setting data CSD relating to the enablement of the processor cores 10a, 10b. Setting data of the current setting data CSD which is not considered to be essential, such as for example the order in which the processor cores 10a, 10b are enabled or whether the screen is enabled, form second setting data of the current setting data CSD.

The first setting data has a digital signature associated thereto which is defined by the provider, while the second setting data has not digital signature associated thereto.

Referring again to Fig. 4, in step S27, the verification device 4 determines which setting data of the current setting data CSD is first setting data. Then, in a step S28, the digital signature associated with the first setting data is loaded. In a step S29, the digital signature associated with the first setting data is measured and a first setting data signature verification result is stored in the same PCR 6 as the default setting signature result of step S22.

In step S26, the validity of the stored first setting data signature verification result is verified against a predetermined requirement along the same lines as in step S26 described above.

Although the present invention has been described in accordance with preferred embodiments, it is obvious for the person skilled in the art that modifications are possible in all embodiments. For example, the processes described in view of Fig. 3 and 4 can be modified in multiple manners. For example, the order of the individual steps (especially all measurement steps) can be changed. Further, in some embodiments, the verification device 4 may omit some of the measurement steps.

Further, the functional components 10a - 10c are merely cited as example and can be replaced or complemented by any functional components that are useful in a computer, such as ROM, graphic card, user interfaces, further processor cores, hypervisor or the like. The same goes to the examples cited for the current and/or default computerized processes, the content of the current and/or default setting data, the characteristics for selecting the first and second setting data and the like.

### REFERENCE NUMERALS

- 1: boot device
- 2: initialization device
- 3: rewritable storage
- 4: verification device
- 5: trusted platform module
- 6: PCR
- 7: digital signature
- 10a - 10c: functional component
- 100: computer system
- CSD: current setting data
- DSD: default setting data
- SIC: system initialization code
- S1-S4, S20 - S29: method steps

## Claims

1. A boot device (1) for a computer system (100), the computer system (100) comprising a plurality of functional components (10a - 10c), wherein the functional components (10a - 10c) are configured to jointly execute a default computerized process to which the computer system (100) can revert to at any time and a current computerized process which replaces the default computerized process when selected, wherein the boot device (1) comprises:
an initialization device (2) for executing a system initialization code (SIC), wherein the execution of the system initialization code (SIC) comprises an initialization of the functional components (10a - 10c) according to setting data, wherein the setting data includes default setting data (DSD) and current setting data (CSD), the default setting data (DSD) indicating how the functional components (10a - 10c) interact to jointly execute the default computerized process and the current setting data (CSD) indicating how the functional components (10a - 10c) interact to jointly execute the current computerized process, and wherein the default setting data (DSD) has a digital signature (7) associated thereto; and
a verification device (4) for determining whether the digital signature (7) associated to the default setting data (DSD) is valid; wherein
the initialization device (2) is configured to only entirely execute the system initialization code (SIC) such that it initializes the functional components (10a - 10c) to jointly execute the current computerized process if the verification device (4) determines that the digital signature (7) associated to the default setting data (DSD) is valid.

2. The boot device according to claim 1, wherein the system initialization code (SIC) is a basic input/output system (BIOS) and/or a unified extensible firmware interface (UEFI).

3. The boot device according to claim 1 or 2, further comprising a storage device (5), wherein the verification device (4) is configured to determine whether the digital signature (7) associated to the default setting data (DSD) is valid by acquiring an indication of a state of the digital signature (7) associated with the default setting data (DSD) to obtain a signature verification result and by storing the signature verification result in the storage device (5), the storage device (5) optionally being a trusted platform module.

4. The boot device according to claim 3, wherein:
the verification device (4) is further configured to acquire an indication of a state of the default setting data (DSD) to obtain a default setting measurement result and to store the default setting measurement result in the storage device (5);
the boot device (1) includes at least one UEFI driver indicating how the initialization device (2) initializes the functional components (10a - 10c) when executing the system initialization code (SIC), wherein the verification device (4) is configured to acquire an indication of a state of the at least one UEFI driver to obtain a driver measurement result and to store the driver measurement result in the storage device (5); and/or
the boot device (1) is configured to store a boot loader program for starting an operating system of the computer system (100), the boot loader program having a digital boot loader signature associated thereto, wherein the verification device (4) is configured to acquire an indication of the digital boot loader signature to obtain a boot loader signature measurement result and store the boot loader signature measurement result in the storage device (5).

5. The boot device according to claim 3 or 4, wherein the verification device (4) is further configured to:
determine whether the signature verification result, the default setting measurement result, the driver measurement result and/or the boot loader signature measurement result stored in the storage device (5) satisfies a predetermined requirement relating to an integrity and/or security of the boot device (1); wherein
the initialization device (2) is configured to entirely execute the system initialization code (SIC) only if the verification device (4) determines that the signature verification result, the default setting measurement result, the driver measurement result and/or the boot loader signature measurement result stored in the measurement device satisfies the predetermined requirement.

6. The boot device according to any one of claims 1 to 5, wherein
the current setting data (CSD) includes first and a second setting data, the first setting data indicating at least one essential functional component (10a - 10c) selected from the plurality of functional components (10a - 10c), the essential functional component (10a - 10c) being essential for performing the current computerized process, and the first setting data having a digital signature associated thereto;
the verification device (4) is configured to determine whether the digital signature associated to the first setting data is valid; wherein
the initialization device (2) is configured to only entirely execute the system initialization code (SIC) such that it initializes the functional components (10a - 10c) to jointly execute the current computerized process if the verification device (4) determines that the digital signature associated to the first setting data is valid.

7. The boot device according to claim 6, wherein the first setting data further includes a first configuration information indicating how the at least one essential functional component interacts (10a - 10c) with the remaining functional components (10a - 10c) in order to jointly execute the current computerized process, wherein the initialization device (2) is configured to initialize the at least one essential functional component (10a - 10c) according to the first configuration information.

8. The boot device according to claim 6 or 7, wherein the second setting data includes a second configuration information indicating how a further functional component (10a - 10c) other than the at least one essential functional component (10a - 10c) interacts with the remaining functional (10a - 10c) components in order to jointly execute the current computerized process; wherein
the initialization device (2) is configured to initialize the further functional component (10a - 10c) according to the second configuration information directly, in particular without verifying if any further digital signature is valid.

9. The boot device according to any one of claims 6 to 8, wherein
the computer system (100) includes a virtualization technology for directed I/O as a functional component (10a - 10c) which is configured to allow other functional components (10a - 10c) to share resources, the essential functional component (10a - 10c) indicated by the first setting data being the virtualization technology for directed I/O; and/or
the computer system (100) includes a plurality of processor cores for parallelly executing computing operations on the computer system (100) as a functional component (10a - 10c), the essential functional component (10a - 10c) indicated by the first setting data being one, several or all processor cores from the plurality of processor cores of the computer system (100).

10. The boot device according to any one of claims 1 to 9, wherein the initialization device (2) is configured to load the default setting data (DSD) before loading the current setting data (CSD) and/or to load the default setting data (DSD) in a first part of the initialization device (2) and the current setting data (CSD) in a second part of the initialization device (2).

11. The boot device according to any one of claims 1 to 10 wherein the setting data comprised in the system initialization code (SIC) includes a plurality of default setting data (DSD) and/or a plurality of current setting data (CSD).

12. The boot device according to any one of claims 1 to 11, wherein the default setting is set by a manufacturer of the boot device (1) and/or the current setting is set by a user of the boot device (1).

13. A method for booting a computer system (100) using a boot device (1), in particular using the boot device (1) according to any one of claims 1 to 12, the computer system (100) comprising a plurality of functional components (10a - 10c), wherein the functional components (10a - 10c) are configured to jointly execute a default computerized process to which the computer system (100) can revert to at any time and a current computerized process which replaces the default computerized process when selected, the method comprising:
loading (S 1) a system initialization code (SIC) to be executed, wherein an execution of the system initialization code (SIC) comprises an initialization of the functional components (10a - 10c) according to setting data, wherein the setting data includes default setting data (DSD) and current setting data (CSD), the default setting data (DSD) indicating how the functional components (10a - 10c) interact to jointly execute the default computerized process and the current setting data (CSD) indicating how the functional components (10a - 10c) interact to jointly execute the current computerized process, and wherein the default setting data (DSD) has a digital signature (7) associated thereto;
determining (S2) whether the digital signature (7) associated to the default setting data (DSD) is valid; and
entirely executing (S3) the system initialization code (SIC) such that it initializes the functional components (10a - 10c) to jointly execute the current computerized process only if it determined that the digital signature (7) associated to the default setting data (DSD) is valid.

14. The method according to claim 13, further comprising:
blocking a modification of the default setting by associating a digital signature (7) to the default setting data (DSD).

15. A computer system (100) comprising the boot device (1) according to any one of claims 1 to 12, wherein the computer system (100) in particular is an industrial PC.
